# EUROPEAN PATENT APPLICATION

(11) **EP 4 295 985 A1**
(43) Date of publication of application: **27.12.2023**
(21) Application number: 23173735.4
(22) Date of filing: 16.05.2023
(51) Int. Cl.: B23K 26/06, B23K 26/082, B23K 26/362, B23K 101/00

(54) **ABLATION TOOL**

(30) Priority: 08.06.2022 GB 202208382
(71) Applicant: Rolls-Royce plc, London N1 9FX (GB)
(72) Inventor: Norton, Andrew, Derby, DE24 8BJ (GB); Kell, James, Derby, DE24 8BJ (GB); O'Key, Michael, Derby, DE24 8BJ (GB)
(74) Representative: Rolls-Royce plc

(57) **Abstract**

A laser ablation tool comprising a laser source which produces a beam heaving a beam path and an ablation head, the ablation head comprising a housing which on each side of the beam path is separated into a first and second portion, and at least a first Risley prism and a second Risley prism connected to the first and second portions of the housing the first and second Risley prisms being connected to a rotation mechanism, so that the two Risley prisms can be moved relative to each other and the housing so as to deflect the beam.

## Description

### Overview of the disclosure

The disclosure relates to a laser ablation tool. In particular, the disclosure relates to a means of controlling the output of a laser ablation tool.

### Background of the disclosure

Ablation is a common method used to clean and as part of a repair process for components. One particular method of interest within the field of ablation is laser ablation. Laser ablation uses a beam from a laser to heat up and vaporise a section of the component. By controlling the wavelength and the power of the laser the operator can adjust the amount of ablation that occurs on the workpiece. Laser ablation offers significant benefits over the other methods of ablation due to its non-contact nature; this means that greater control can be exercised over it. As such, its adaptability means that it can be used in a number of different fields of industry.

Although laser ablation is a desirable tool it is difficult to use in restricted areas, such as those in a gas turbine engine where direct laser access is not possible. To overcome this limitation the laser needs to be coupled to a fibre with a borescope setup and then focussed using a micro-electromechanical system (MEMS) to manipulate the beam across the surface of an object to perform activities or by using a fixed optical structure with a diffractive optical element on the tip. However, these techniques have the following drawbacks: a MEMS architecture can be both expensive to produce and fragile for using within an enclosed environment. Current MEMS devices have less than mm features which, due to the choice of materials, can often fail when the device is knocked against the structure being worked on during deployment. Furthermore, due to the actuation methodology of having a series of electrical "fingers" which drive the actuation of the MEMS, the system is liable to short circuit when dust and debris get into the system. On the other hand, the use of a fixed diffractive optical element has advantages because it can shape the beam to different profiles for example top hat rather than Gaussian, which provides the advantage of being able to do a more controlled ablation of the surface. However, as it is a fixed optical structure, it is not possible to do on-the-fly adjustments when a larger / smaller piece of damage requires rectification. In addition, the system naturally spreads the beam over a large area, which resultantly reduces the beam intensity. This can be a downside because if the beam is spread too far the beam energy is insufficient for ablation. The aforementioned systems can often be fragile and limit the lifespan or not produce the requisite intensity of the ablation head. Consequently, it is desirable to produce a more robust controllable ablation head.

### Summary of the Disclosure

The scope of the disclosure is set out in the appended claims.

According to a first aspect of the disclosure there is provided a laser ablation tool comprising a laser source which produces a beam heaving a beam path and an ablation head, the ablation head comprising a housing which on each side of the beam path is separated into a first half and second half portion, and at least a first Risley prism and a second Risley prism, both of which are connected to the first half and second half portions of the housing, the first and second Risley prisms being connected to a rotation mechanism, so that the at least two Risley prisms can be rotate relative to each other and the housing so as to deflect the beam and wherein the laser ablation tool is connected to a borescope or compliant or hyper-redundant robot with the head being connected to the distal end of the borescope or compliant robot.

The ablation tool may further comprise an angled mirror and a lens or aperture.

The rotation mechanisms may be a pair of motors mounted within the head, with a first motor connected to the first Risley prism and a second motor connected to the second Risley prism.

The rotation mechanism may comprise a first and second motors that are mounted external to the laser ablation tool and are coupled to the first and second Risley prisms via respective driveshafts.

The movement mechanism of the first and second Risley prism may be piezoelectric drives.

The rotation mechanism may comprise separate pneumatic turbines that are connected to the first and second prisms and are driven to rotate by directing a fluid to flow against them.

The pneumatic turbines may be supplied with separate fluid supplies to drive each turbine.

The rotation mechanism may be coupled to a gearing system, which increases the speed of rotation of the first and second Risley prism.

The rotation mechanism may be coupled to encoders to monitor the position of the first and second Risley prism.

The encoders are coupled to a controller that is coupled to the output of the laser so that the beam is only outputted at certain positions of the two respective Risley prisms.

The encoders may be coupled to a gate on the output of the laser such that the output of the laser and the position of the Risley prisms is controlled to direct the beam to fixed known point.

The laser source is nano-second or pico-second pulsed laser.

According to a second aspect of the disclosure there is provided a method of ablating a component comprising: coupling a laser to the laser ablation head of the first aspect, positioning the laser ablation head in proximity to an area that requires ablation, starting the laser along with initiating the rotation means for driving the prisms, using the laser and passing the beam through a cavity containing spinning Risley prisms and scanning the laser beam across the surface of the component to be scanned.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief description of the figures

Embodiments will now be described by way of example only, with reference to the Figures, in which:
Figure 1 presents an example of a laser ablation head according to the present disclosure;
Figure 2 presents an example of a laser ablation head coupled to a borescope;
Figure 3 presents an example of the utilisation of a laser ablation head mounted to a borescope; and
Figure 4 presents a flow chart of operation of the ablation head according to the present disclosure.

### Detailed Description

Aspects and embodiments of the present disclosure will now be discussed with reference to the accompanying figures. Further aspects and embodiments will be apparent to those skilled in the art.

The removal of material, such as thermal barrier coatings, can be performed by a high-power pulsed laser. The high-power laser pulse vaporises the material in a controlled way, such that the micron-sized deposits that have been vapourised and removed condense away from the region of interest. The use of a pulsed laser ensures that there is limited heat input into the surface, which could otherwise cause local microstructural changes; this for example, may be sintering of the thermal barrier coating, removal of pores, reduction in thermal fatigue compliance, and increased risk in spallation. In ablation systems laser spot can be traced over the surface either by moving the probe or directing the beam.

The current disclosure, rather than controlling the beam through a lens or a MEMS system of the prior art, utilises Risley prisms to direct the beam. Risley prisms work in pairs. By orienting the two prisms so that they refract light in the same direction, they act as a single prism with twice the angle of refraction prism individually. If each prism is rotated about the optical axis by the same angle but in opposite directions, the beam is deviated by a small amount but remains close to the plane defined by the optical axis and the refracted beam. If the prisms are rotated through 90°, they combine to act as a parallel plate with no net angular deviation. As such, in the present disclosure it is possible to use this refraction property of the prisms as they are rotated such that an ablation path can be traced by rotating one Risley prism, which results in a range of ablation paths being produced from the effect of refraction on the laser beam. Therefore, by driving the motors at different speeds and in different directions a range of shapes can be drawn on the workpiece. These patterns can be circles, spirals or squares. Although described as Risley prisms or crystals the skilled person will appreciate that the same effect can be achieved through the use of two prisms or wedges having the same properties as described above. Thus, by utilising two spinning wedges, a series of laser ablation profiles across the workpiece can be produced through the coordinated movements of the two prisms.

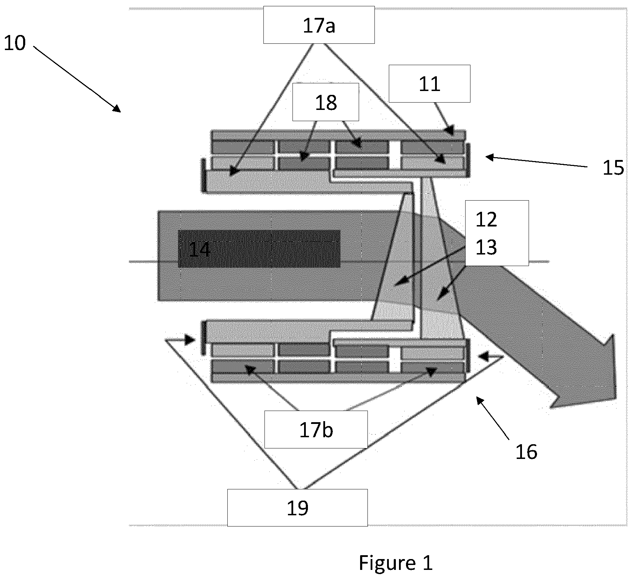

Figure 1 presents an example of a laser ablation tool according to the present disclosure. The laser ablation head 10 comprises a housing 11 that is separated about a beam path 14. The two sides of the housing are separated into first half and second half portions 15 and 16 respectively. In the case of figure 1 the first half portion 15 is shown as the upper portion and the second half portion is shown as the lower portion. However, other configurations could be envisaged. A first Risley crystal 12 is positioned on the first half portion such that it bridges across the beam path and connects the first half portion and second half portion of the two sides of the housing. The second Risley crystal 13 is positioned on the second portion of the housing so that it bridges across the beam path and connects the first half portion and the second half portion of the housing. The first half portion and second half portions are connected to each other with the Risley prisms that link between them being rotatable relative to one another through the use of motor rotors 17a and stators 17b. Bearings 18 can be used to help reduce the friction in the movement of the first and second portions relative to each other. Thus, through co-ordinated movement/rotation of the first and second portions of the housing causes a movement of the first and second Risley crystal relative to one another. Control of the motion of the first and second portions relative to each other may be controlled through the use of rotary encoders 19. This movement of the Risley crystal causes a controlled deflection of the beam so that the laser beam can ablate a controlled area of the target area of the system. The output beam from the Risley crystals may be passed through a lens to focus or collimate the beam after it has passed through the riley crystals. The lens may have any suitable focal length for the system that the device is operating in. The focal length may be between 5 mm to 100mm, although a broader range may be desirable depending on the use case. Through control of the focal length and the positioning of the tool relative to it the intensity of the beam can be varied. The laser light may be passed into the ablation head by coupling it to a fibre that is coupled to the output of the laser.

The laser may be any suitable laser as would be appreciated by the person skilled in the art. In particular, the laser may be a pulsed laser. Such a laser may have a pulse duration of nanosecond or picosecond. For example this may be a Nd:YAG or Er:YAG laser, pulsed gas lasers, high power laser diodes or equivalent. This can operate at any suitable wavelengths and be selected based on the use cases and ablation requirements.

The use of borescopes and/or manipulatable compliant or hyper-redundant robots is known within confined spaces for inspecting and repairing damaged components within these. Some complex systems, such as gas turbine engines, are provided with ports or holes to allow a borescope to be used so that it can access certain regions of the system. These systems are highly manipulatable and have multiple degrees of freedom so that they can access difficult to reach regions. Such robotic systems are complex and require a user input to control and position them within the workspace. In order to be able to repair and service components in difficult to access areas it is important that the ablation tool can also be used. Therefore, it is crucial to be able to couple an ablation tool to a borescope or compliant or hyper-redundant robot. This allows the ablation tool to access difficult to reach locations and repair such complex systems. Such a system allows for controlled ablation over a larger area in a greater controlled way than through the use of lens or MEMs systems of the prior art.

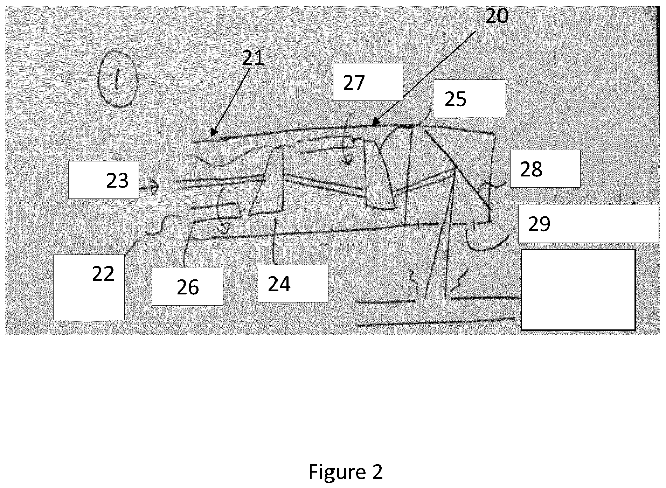

Figure 2 presents an example of a laser ablation head coupled to a borescope according to the present disclosure. In this the laser ablation head 20, is coupled to a borescope 21. Within the conduit for the borescope lies the electrical cables 22 for controlling the motion of the motors and stators for the Risley prisms and the fibre 23 carrying the laser. The electrical cables are connected motors and stators for driving the first and second Risley 24 and 25 prisms. These prisms are controlled by first motors 26 and second motors 27. These motors and stators are solely present to control the motion/rotation of the prisms and additionally an encoder may be used to increase the accuracy of control of the motion of the prisms. The figure shows the deflection of the beam due to refraction of the beam. Once the laser beam has been passed from the Risley prisms the beam passes onto an angled mirror 28. The mirror allows the beam to exit the borescope perpendicular to the axis of the laser ablation head. The mirror can be set at any suitable angle so that the beam exits at any suitable angle relative to the orientation of the head. A lens or aperture 29 may be present to allow the beam to exit and if a lens is present to focus or collimate the beam into a more suitable profile for ablation.

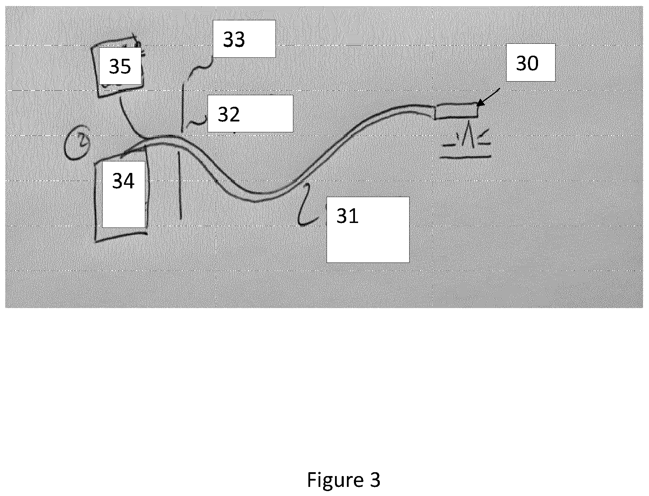

Figure 3 shows a full example of a borescope laser ablation tool featuring the ablation head according to the present disclosure. In this the laser ablation head 30 is connected to the borescope conduit 31. The borescope and the laser ablation head are able to access a part of a complex system, such as a gas turbine engine, through an access port or borescope hole 32 in the casing 33. At the other end of the borescope there is a laser source 34, which couples the output of the laser with a fibre so that the beam can be transmitted along the borescope through an optical fibre. There is also a motor 35 to control the movement of the borescope.

This disclosure describes the use of two optical crystal wedges/prisms (or a Risley pair) within a miniaturised laser ablation head. The head is suitable to be connected to a robotic system such as a compliant robot or borescope or a walking swarm or segmented arm guide tubes. This allows the head to be able to be deployed into a borescope port or similar access port on the end of a deployment device - as shown above. The laser ablation head, as shown, functions by motors rotating the wedges or prisms about their central axis. The wedges can be housed with suitable bearings to allow for rotation of the prism. In order to work light is directed from a laser source. The laser source is positioned proximal to the laser ablation head with the output being directed to the cavity containing the prisms. This output may be coupled through the use of a fibre; this can be a single-mode or multi-mode laser fibre. A lens may be used at the end of the fibre to converge the laser spot and direct it parallel to the axis of rotation of the two Risley prisms. The laser beam then exits the device, such that it can ablate the surface of a component. If required, the head will include a 45° mirror such that the beam can be directly perpendicular to the head (i.e. a side facing ablation system). Thus, by moving/rotating the wedges at different speeds and in different directions, different shapes can be drawn across the surface of the component of interest with the laser beam; this allows for a controlled region of ablation.

There are a number of options for mechanisms for spinning the prisms within the laser ablation head. One such approach is to use miniaturised motors driving the inner diameter or outer diameter of a ring - as shown in Figure 1. The electrical cables for the motors may be routed through the centre of the borescope conduit parallel to the laser fibre. Alternatively, the motor coils could be located around the ring and the ring made of a magnetic material. Alternatively, the motor may be located outside of the ablation head and move the mirrors through the use of a drive shaft. The drive shafts may also have a gear system to increase or decrease the speed of rotation. The driveshaft may couple to the prisms directly or via a gear drive. This driveshaft may be located parallel to the cavity containing the Risley prisms. For example, the drive shafts may pass down the borescope conduit and lie parallel to the laser fibre. The motors may be positioned on the same side of the cavity or on opposite sides of the cavity as shown in Figure 1. The advantage of the latter configuration is that the motor can be larger, more powerful, and more accurate. However, it has the downside that there will be friction between the drive shaft and the probe, especially if the probe is bent.

An alternative to using motors is to utilise a fluid medium. Such a mechanism may utilise a fluid like air, which can be passed through the internal cavity of the borescope and directed onto a miniaturised air turbine connected the prisms. The advantage of this mechanism is that higher speeds can be achieved; this is akin to a dentist drill. The air driven mechanism also has the benefit that the air can be directed outside of the head to help remove unwanted spatter from the ablation process. The downside, however, is that to spin the two wedges at two different speeds, two different air lines will be required which would increase the complexity of the drive mechanism for the ablation head. This approach could also include the use of other fluid media such as water or an inert gas, and the system may be designed to ensure that such gas exits the head over the ablated area to provide a gas shielding during the laser process. A further method of driving the Risley prisms could utilise piezoelectrics drive connected to the prisms.

The prisms or Risley wedges may be rotated as a pair or separately, in a clockwise or contraclockwise way or in both directions. The effect of rotation in both directions allows for a complex path to be traced be the ablation tool.

Each of these above listed approaches to drive the prisms could incorporate gear systems in order to spin the wedges faster than the speed of the actuation method on its own. This can be important because scanning speed is a key input variable for laser ablation. The period of rotation can be set at any suitable value. For example, the period of rotation may be between 100 ms and 500 ms. The wedges may run at the same speed or at different speeds. The difference between the speeds may be small. For example, the difference between the speeds may be ±10%. All of the mechanisms listed above may operate either encoded or unencoded. The use of encoding has the advantage that the exact rotating of the prism is known. This known position from the encoding can be utilised by a control system to synchronise with the laser ablation process, such that it only ablates at certain beam positions. Other options for encoders are possible such as optical means to identify the position of the prisms. This may utilise having a marker that reflects a signal at a fixed position.

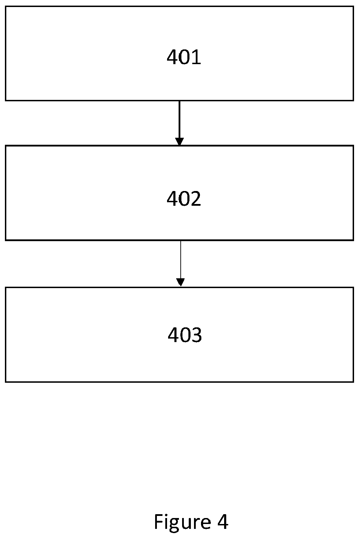

Figure 4 presents a schematic of the operation. In operation a laser is coupled to the laser ablation head. In step 401 the laser ablation head is inserted into the workspace and positioned into a location proximate to an area that requires ablation. In step 402 the laser is started along with the rotation means for driving the prisms. With the laser going and the prisms spinning the laser can scan across the surface of the component to be scanned. If encoders are used in conjunction with a control program the motors and the laser can be linked so that a controlled scanning beam can be produced, as the laser output and the position of the crystals can be linked. The head can be repositioned after this first stage to work on a new target area. In step 403 the head is removed from the workspace.

The advantages of utilising a Risley prism beam-steering system as described above is the compactness, relative insensitivity to vibration, low moment of inertia, independent rotational axes, robustness and speed. However, there is a disadvantage in the system has inherent chromatic aberration. Chromatic aberrations can be corrected in the same way that lenses can: by combining materials that have differing indices and dispersion characteristics.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A laser ablation tool comprising a laser source which produces a beam heaving a beam path and an ablation head,
the ablation head comprising a housing which on each side of the beam path is separated into a first half and second half portion, and at least a first Risley prism and a second Risley prism connected to the first half and second half portions of the housing the first and second Risley prisms being connected to a rotation mechanism, so that the two Risley prisms can be moved relative to each other and the housing so as to deflect the beam and wherein the laser ablation tool is connected to a borescope or compliant robot with the head being connected to the distal end of the borescope or compliant robot.

2. The laser ablation tool according to claim 1, wherein the ablation tool further comprises an angled mirror and a lens.

3. The laser ablation tool according to claim 1, wherein the ablation tool further comprises an angled mirror and an aperture.

4. The laser ablation tool according to any preceding claim, wherein the rotation mechanisms is a pair of motors mounted within the head, with a first motor connected to the first Risley prism and a second motor connected to the second Risley prism.

5. The laser ablation tool according to any one of claims 1-3, wherein the rotation mechanism comprises a first and second motors that are mounted external to the laser ablation tool and are coupled to the first and second Risley prisms via respective driveshafts.

6. The laser ablation tool according to any one of claims 1-3, wherein the movement mechanism of the first and second Risley prism is piezoelectric drives.

7. The laser ablation tool according to any one of claims 1-3, wherein the rotation mechanism comprises separate pneumatic turbines that are connected to the first and second prisms and are driven to rotate by directing a fluid to flow against them.

8. The laser ablation tool according to claim 7, wherein the pneumatic turbines are supplied with separate fluid supplies to drive each turbine.

9. The laser ablation tool according to any preceding claims wherein the rotation mechanism is coupled to a gearing system.

10. The laser ablation tool according to any preceding claim, wherein the rotation mechanism is coupled to encoders to monitor the position of the first and second Risley prism.

11. The laser ablation tool according to claim 10, wherein the encoders are coupled to a controller that is coupled to the output of the laser so that the beam is only outputted at certain positions of the two respective Risley prisms.

12. The laser ablation tool according to claim 10 or claim 11, wherein the encoders are coupled to a gate on the output of the laser such that the output of the laser and the position of the Risley prisms is controlled to direct the beam to fixed known point.

13. The laser ablation tool according to any preceding claim, wherein the laser source is nano-second or pico-second pulsed laser.

14. A method of ablating a component comprising: coupling a laser to the laser ablation head according to any one of claims 1-13, positioning the laser ablation head in proximity to an area that requires ablation, starting the laser along with initiating the rotation means for driving the prisms, using the laser and passing the beam through a cavity containing spinning Risley prisms and scanning the laser beam across the surface of the component to be scanned.
